# EUROPEAN PATENT SPECIFICATION

(11) **EP 3 012 085 B1**
(45) Date of publication and mention of the grant of the patent: **20.12.2017**
(21) Application number: 15189825.1
(22) Date of filing: 14.10.2015
(51) Int. Cl.: B29C 45/77

(54) **INJECTION MOLDING MACHINE**
SPRITZGIESSMASCHINE
MACHINE DE MOULAGE À INJECTION

(30) Priority: 22.10.2014 JP 2014215727
(43) Date of publication of application: 27.04.2016
(73) Proprietor: SUMITOMO HEAVY INDUSTRIES, LTD., Tokyo 141-6025 (JP)
(72) Inventor: TOKUNO, Ryuichi, Chiba-shi Chiba 263-0001 (JP)
(74) Representative: Louis Pöhlau Lohrentz

(56) References cited:
- JP-A- 2006 327 094
- US-A1- 2002 163 097
- US-A1- 2008 226 762

## Description

### BACKGROUND OF THE INVENTION

### Field of the Invention

The present invention relates to an injection molding machine.

### Description of Related Art

Injection molding machines have an injection unit that fills the inside of a mold unit with a molding material, a controller that controls the injection unit, and the like. The injection unit has, for example, a cylinder, a nozzle, a screw, and an injection motor. The cylinder heats a molding material. The nozzle is provided at a front end of the cylinder, and is pressed against the mold unit. The screw is made movable forward and backward within the cylinder, and feeds the molding material in front of the screw from the cylinder. The injection motor moves the screw forward and backward. The controller carries out a filling process of driving the injection motor to control the speed of the screw, and a hold pressure process of driving the drive device to control pressure acting on the molding material from the screw. The filling process and the hold pressure process are repeatedly performed.

United States Patent Application US 2002/163097 A1 discloses a molding procedure in which, during a filling step, the forward movement speed of the screw is controlled in accordance with a predetermined speed pattern until the screw reaches a given position, where a deceleration step is started. In the deceleration step, the forward movement speed of the screw is controlled in a feedback manner such that the internal pressure of the mold reaches a predetermined target pressure. When the screw reaches a pressure holding initiation position or pressure holding initiation time, the pressure holding step is started.

A technique of reducing the setting speed of the screw in the middle of the filling process is suggested (for example, refer to Japanese Unexamined Patent Application Publication No. 2011-183704). According to this technique, the molding material is made to flow mainly due to residual pressure or the like after the setting speed of the screw is reduced. The peak pressure of the molding material in the filling process can be reduced, generation of flash can be reduced, and clamping force can also be reduced. By virtue of the reduction of the clamping force, the gas escape in the mold unit also becomes excellent, and poor transfer can be reduced. Additionally, since switchover is made from speed control to pressure control if the pressure of the molding material reaches a switchover setting pressure after the setting speed of the screw is reduced, generation of flash and sink marks can be suppressed.

Particularly, when the amount of filling increases, such as when thick molding products are formed, filling time also becomes very long. In such a case, the setting width of the switchover setting pressure from the speed control to the pressure control also becomes large. As a result, substantial time is taken for setting of the switchover setting pressure.

### SUMMARY OF THE INVENTION

The invention has been made in view of the above problems, and a main object thereof is to provide an injection molding machine that can reduce a user's time and effort.

In order to solve the above problems, according to an aspect, there is provided an injection molding machine of the invention including a cylinder that heats a molding material which is filled with the inside of a mold unit; a feeding member that feeds the molding material within the cylinder; a drive device that moves the feeding member forward and backward; a controller that carries out a filling process of driving the drive device to control the speed of the feeding member, and a hold pressure process of driving the drive device to control pressure acting on the molding material from the feeding member; and a detector that detects information on the pressure of the molding material. If the speed of the feeding member when moving forward is made positive and the speed of the feeding member when moving backward is made negative, the setting speed of the feeding member is reduced in the middle of the filling process. The controller performs switchover from the filling process to the hold pressure process on the basis of the amount of change of a detection value of the detector after the setting speed is reduced.

According to the aspect of the invention, the injection molding machine that can reduce a user's time and effort is provided.

### BRIEF DESCRIPTION OF THE DRAWINGS

FIG. 1 is a view illustrating an injection molding machine according to an embodiment of the invention.
Fig. 2 is a view illustrating screw speed in a filling pro cess according to the embodiment of the invention.
Fig. 3 is a view illustrating the pressure that a screw receives from a molding material in the filling process and a hold pressure process according to the embodiment of the invention.

### DETAILED DESCRIPTION OF THE INVENTION

Although an embodiment for carrying out the invention will be described below with reference to the drawings, in the respective drawings, the same or corresponding components will be designated by the same or corresponding reference numerals, and the description thereof will be omitted.

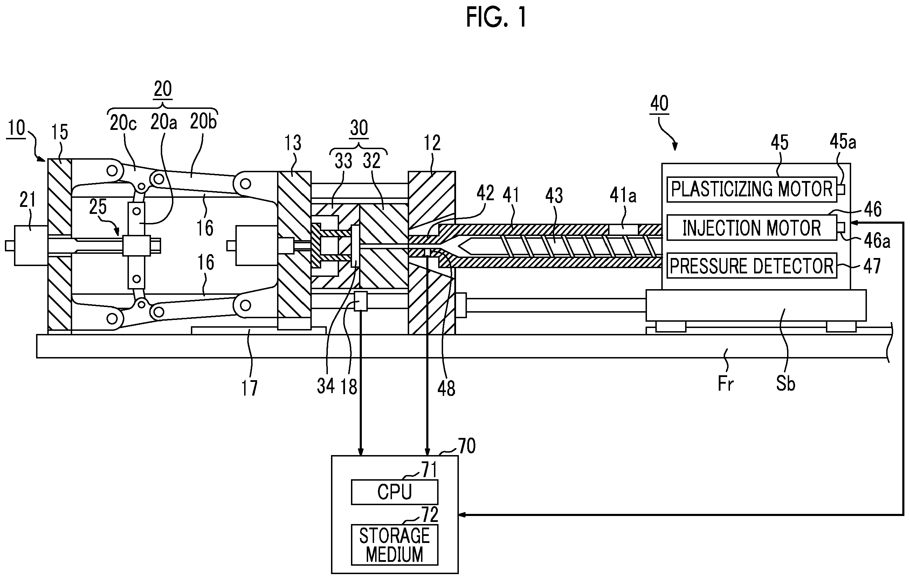

FIG. 1 is a view illustrating an injection molding machine according to an embodiment of the invention. The injection molding machine illustrated in Fig. 1 has a frame Fr, a mold clamping unit 10, an injection unit 40, a controller 70, and the like. The controller 70 has a central processing unit (CPU) 71, and a storage medium 72, such as a memory. The controller 70 makes the CPU 71 execute a program stored in the storage medium 72, thereby controlling the mold clamping unit 10 and the injection unit 40.

Next, the mold clamping unit 10 will be described. In the description of the mold clamping unit 10, a description will be made with a movement direction (rightward direction in FIG. 1) of a movable platen 13 during mold closing being the front and a movement direction (leftward direction in FIG. 1) of the movable platen 13 during mold opening being the rear.

The mold clamping unit 10 performs mold closing, mold clamping, and mold opening of a mold unit 30. The mold clamping unit 10 has a stationary platen 12, a movable platen 13, a rear platen 15, a tie-bar 16, a toggle mechanism 20, a mold clamping motor 21, and a motion conversion mechanism 25.

The stationary platen 12 is fixed to the frame Fr. A stationary mold 32 is attached to the surface of the stationary platen 12 that faces the movable platen 13.

The movable platen 13 is made movable along a guide (for example, a guide rail) 17 laid on the frame Fr, and is made movable forward and backward with respect to the stationary platen 12. A movable mold 33 is attached to the surface of the movable platen 13 that faces the stationary platen 12.

Mold closing, mold clamping, and mold opening are performed by moving the movable platen 13 forward and backward with respect to the stationary platen 12. The mold unit 30 is constituted of the stationary mold 32 and the movable mold 33.

The rear platen 15 is coupled to the stationary platen 12 at a distance therefrom, and is placed on the frame Fr so as to be movable in a mold opening/closing direction. In addition, the rear platen 15 may be made movable along with a guide laid on the frame Fr. The guide of the rear platen 15 may be shared by a guide 17 of the movable platen 13.

In addition, in the present embodiment, the stationary platen 12 is fixed to the frame Fr and the rear platen 15 is made movable in the mold opening/closing direction with respect to the frame Fr. However, the rear platen 15 may be fixed to the frame Fr and the stationary platen 12 may be made movable in the mold opening/closing direction with respect to the frame Fr.

The tie-bar 16 couples the stationary platen 12 and the rear platen 15 with a space therebetween. A plurality of tie-bars 16 may be used. Each tie-bar 16 is made parallel to the mold opening/closing direction, and is extended in response to a clamping force. At least one tie-bar 16 is provided with a clamping force detector 18. The clamping force detector 18 may be of a strain gauge type, and may detect the strain of the tie-bar 16, thereby detecting a clamping force.

In addition, the clamping force detector 18 is not limited to the strain gauge type, and may be of a piezoelectric type, a capacitance type, a hydraulic type, an electromagnetic type, or the like, and the attachment position thereof is also not limited to the tie-bar 16.

The toggle mechanism 20 is disposed between the movable platen 13 and the rear platen 15. The toggle mechanism 20 is constituted of a cross-head 20a, a plurality of links 20b and 20c, and the like. One link 20b is rockably attached to the movable platen 13, and the other link 20c is rockably attached to the rear platen 15. The links 20b and 20c are bendably and stretchably coupled together by a pin or the like. By moving the cross-head 20a forward and backward, the plurality of links 20b and 20c are bent and stretched, and the movable platen 13 is moved forward and backward with respect to the rear platen 15.

The mold clamping motor 21 is attached to the rear platen 15, and the movable platen 13 is moved forward and backward by moving the cross-head 20a forward and backward. The motion conversion mechanism 25, which converts the rotational motion of the mold clamping motor 21 into a linear motion to transmit the converted linear motion to the cross-head 20a, is provided between the mold clamping motor 21 and the cross-head 20a. The motion conversion mechanism 25 is constituted of, for example, a ball screw mechanism.

The operation of the mold clamping unit 10 is controlled by the controller 70. The controller 70 controls a mold closing process, a mold clamping process, a mold opening process, and the like.

In the mold closing process, the movable mold 33 is brought into contact with the stationary mold 32 by driving the mold clamping motor 21 to move the movable platen 13 forward.

In the mold clamping process, a clamping force is generating by further driving the mold clamping motor 21. A cavity space 34 is formed between the movable mold 33 and the stationary mold 32 during mold clamping, and the cavity space 34 is filled with a liquid molding material. The molding material within the cavity space 34 is solidified and becomes a molding product.

In the mold opening process, the movable mold 33 is separated from the stationary mold 32 by driving the mold clamping motor 21 to move the movable platen 13 backward.

Next, the injection unit 40 will be described. In the description of the injection unit 40, unlike the description of the mold clamping unit 10, a description will be made with a movement direction (leftward direction in FIG. 1) of the screw 43 during filling being the front, and a movement direction (rightward direction of FIG. 1) of the screw 43 duringplasticizing being the rear.

The injection unit 40 is installed in a sliding base Sb that is movable forward and backward with respect to the frame Fr, and is movable forward and backward with respect to the mold unit 30. The injection unit 40 is touched on the mold unit 30, and the inside of the mold unit 30 is filled with the molding material. The injection unit 40 has, for example, a cylinder 41, a nozzle 42, a screw 43, a plasticizing motor 45, an injection motor 46, and a pressure detector 47.

The cylinder 41 heats the molding material supplied from a supply port 41a. The supply port 41a is formed at a rear part of the cylinder 41. Aheating source, such as a heater, is provided at the outer periphery of the cylinder 41.

The nozzle 42 is provided at a front end of the cylinder 41, and is pressed against the mold unit 30.

The screw 43 is a feeding member that feeds the molding material within the cylinder 41. The screw 43 is disposed within the cylinder 41 so as to be rotatable and movable forward and backward.

The plasticizing motor 45 rotates the screw 43, thereby feeding the molding material forward along a spiral groove of the screw 43. The molding material is gradually melted by the heat from the cylinder 41 while being fed forward. When the liquid molding material is fed to the front of the screw 43 and accumulated at a front part of the cylinder 41, the screw 43 is moved backward.

The injection motor 46 is a drive device that moves the screw 43 forward and backward. The injection motor 46 moves the screw 43 forward and backward, thereby filling the cavity space 34 of the mold unit 30 with the liquid molding material accumulated in front of the screw 43. Thereafter, the injection motor 46 pushes the screw 43 forward, and applies pressure to the molding material within the cavity space 34. An insufficient molding material can be replenished. A motion conversion mechanism that converts the rotational motion of the injection motor 46 into a linear motion of the screw 43 is provided between the injection motor 46 and the screw 43.

The pressure detector 47 is disposed, for example, between the injection motor 46 and the screw 43, and detects the pressure that the screw 43 receives from the molding material, backpressure to the screw 43, or the like. The pressure that the screw 43 receives from the molding material is equivalent to pressure acting on the molding material from the screw 43.

The operation of the injection unit 40 is controlled by the controller 70. The controller 70 controls the fillingprocess, the hold pressure process, a plasticizing process, or the like.

In the filling process, the injection motor 46 is driven to move the screw 43 forward at a setting speed, and the inside of the mold unit 30 is filled with the liquid molding material accumulated in front of the screw 43. The position or the speed of the screw 43 is detected by, for example, an encoder 46a of the injection motor 46.

In the hold pressure process, the injection motor 46 is driven to push the screw 43 forward with a setting pressure, and pressure is applied to the molding material within the mold unit 30. An insufficient molding material can be replenished. The pressure of the molding material is detected, for example, by the pressure detector 47. A cooling process is started after the hold pressure process. In the cooling process, hardening of the molding material within the cavity space 34 is performed. The plasticizing process may be performed during the cooling process.

In a plasticizing process, the plasticizing motor 45 is driven to rotate the screw 43 at a set number of rotations, and feeds the molding material forward along the spiral groove of the screw 43. The molding material is gradually melted with this feeding. When the liquid molding material is fed to the front of the screw 43 and accumulated at the front part of the cylinder 41, the screw 43 is moved backward. The number of rotations of the screw 43 is detected, for example, by an encoder 45a of the plasticizing motor 45.

In the plasticizing process, the injection motor 46 is driven to apply a set back pressure to the screw 43 in order to limit sudden backward movement of the screw 43. The back pressure to the screw 43 is detected, for example, by the pressure detector 47. The plasticizing process is completed if the screw 43 moves backward to a predetermined position and a predetermined amount of the molding material is accumulated in front of the screw 43.

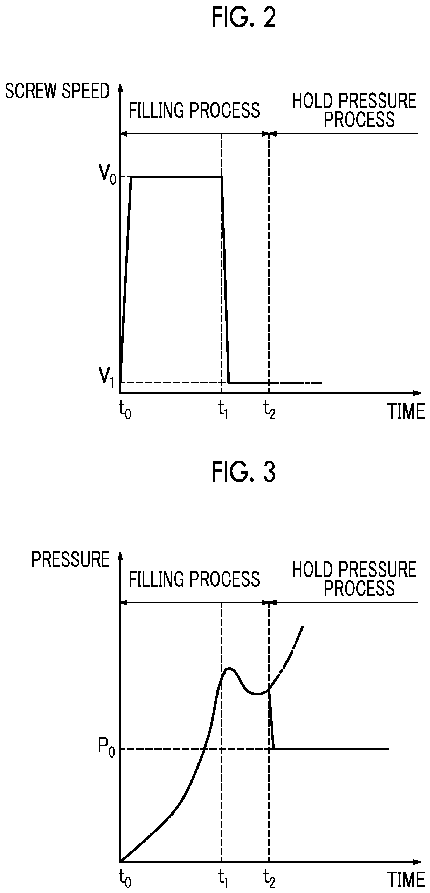

Fig. 2 is a view illustrating screw speed in the filling process according to the embodiment of the invention. In Fig. 2, the horizontal axis represents time and the vertical axis represents the screw speed. Fig. 3 is a view illustrating the pressure that the screw receives from the molding material in the filling process and the hold pressure process according to the embodiment of the invention. In Fig. 3, the horizontal axis represents time and the vertical axis represents pressure. In Figs. 2 and 3, one-dot chain lines illustrate a situation in which the pressure rises again.

The filling process is started at time t0, and the setting speed of the screw 43 is set to V₀ (>0). The speed of the screw 43 being positive indicates forward movement of the screw 43, and the speed of the screw 43 being negative indicates backward movement of the screw 43.

At the time t₀, the screw 43 is moved forward at a setting speed V₀, and the inside of the mold unit 30 is filled with the molding material accumulated in front of the screw 43. The pressure that the screw 43 receives from the molding material rises gradually. This pressure can be detected by the pressure detector 47.

At time t₁ in the middle of the filling process, if the position of the screw 43 reaches a speed switchover position, the setting speed of the screw 43 is reduced from V₀ to V₁ (V₀ > V₁ > 0). The screw 43 is moved forward at a very slow speed, and the molding material is made to flow mainly due to residual pressure or the like. The peak pressure of the molding material in the filling process can be reduced, generation of flash can be reduced, and the clamping force can also be reduced. By virtue of the reduction of the clamping force, the gas escape in the mold unit 30 also becomes excellent, and poor transfer can be reduced.

In addition, although V₁ is made positive in Fig. 2, V₁ may be zero or negative. The absolute value of V₁ may be smaller than the absolute value of V₀, and the screw 43 may be stopped or moved backward at a very low speed. Even in these cases, the peak pressure of the molding material in the filling process can be reduced.

Although the pressure that the screw 43 receives from the molding material drops after the time t₁ (hereinafter referred to as "speed switchover time t₁") when the setting speed of the screw 43 is reduced from V₀ to V₁, the pressure may rise again as illustratedbyone-dot chain linesinFigs. 2 and 3. For example, when a flow front of the molding material reaches an end point, the pressure rises again. If the pressure rises again too much, the quality of molding products may deteriorate.

Thus, after the speed switchover time t₁, the controller 70 performs V/P switchover on the basis of the amount of change of the detection value of the pressure detector 47 so that the pressure does not rise again too much. The re-rise of the pressure can be detected, for example, on the basis of the time differential of the detection value of the pressure detector 47. When the pressure rises again, the above time differential is changed from negative to positive.

For example, the controller 70 performs the V/P switchover when the detection value of the pressure detector 47 decreases and the above time differential exceeds a reference value. The reference value is substantially zero. Although the reference value is optimally zero, the reference value may have a certain degree of allowable width, and may be either positive or negative. When the reference value is positive, the V/P switchover, as illustrated by a solid line in Fig. 3, is performed at time t₂ immediately after the detection value begins to rise again. When the reference value is negative, the V/P switchover is performed immediately before the detection value begins to rise again. When the reference value is negative, the waiting time taken until the V/P switchover is performed after the above time differential reaches the reference value may be set.

In addition, a detector used for the V/P switchover only has to detect information on the pressure of the molding material, and is not limited to the pressure detector 47. For example, a nozzle pressure detector 48 other than the pressure detector 47 can be used. The nozzle pressure detector 48 detects the pressure of the molding material within the nozzle 42. Although one detector may be used, an arbitrary number of the detectors may be used in combination.

In order to prevent the pressure from dropping too much after the speed switchover time t₁, it is preferable that the controller 70 moves the screw 43 forward at a very low speed.

In addition, after the speed switchover time t₁, when the pressure of the molding material continues dropping and the pressure of the molding material reaches a predetermined switchover setting pressure, the controller 70 may perform the V/P switchover.

In addition, in Fig. 2, the setting speed of the screw 43 is constant from the time to at the start of the filling process to the speed switchover time t₁, and the setting speed may be changed. When the switchover of the setting speed of the screw 43 is performed two or more times in the filling process, the final switchover time may be the speed switchover time t₁.

Although the embodiment of the injection molding machine has been described above, the invention is not limited to the above-described embodiment, and various alterations and improvements can be made within the scope of the invention described in the claims.

For example, although the injection unit 40 of the above embodiment is of an in-line screw type, the injection unit may be of a preplasticization type. The preplasticization type injection unit supplies a molding material melted within a plasticizing cylinder to an injection cylinder, and injects the molding material into the mold unit from the injection cylinder. The screw is disposed inside the plasticizing cylinder so as to be rotatable or rotatable and movable forward and backward, and a plunger is disposed within the injection cylinder so as to be movable forward and backward. In this case, the plunger corresponds to a feeding member set forth in the claims, and the injection cylinder corresponds to a cylinder set forth in the claims.

Although the mold clamping unit 10 of the above embodiment has the mold clamping motor 21 as a driving source, the mold clamping unit may have a hydraulic cylinder instead of the mold clamping motor 21. Additionally, the mold clamping unit 10 may have a linear motor for mold opening and closing, and may have an electromagnet for mold clamping.

## Claims

1. An injection molding machine comprising:
a cylinder (41) that heats a molding material which is filled the inside of a mold unit (30);
a feeding member (43) that feeds the molding material within the cylinder (41);
a drive device (46) that moves the feeding member (43) forward and backward;
a controller (70) that is programmed to carry out a filling process of driving the drive device (46) to control the speed of the feeding member (43), and a hold pressure process of driving the drive device to control pressure acting on the molding material from the feeding member (43); and
a detector (47; 48) that detects information on the pressure of the molding material, wherein the controller (70) is programmed to reduce, if the speed of the feeding member (43) when moving forward is made positive and the speed of the feeding member (43) when moving backward is made negative, the setting speed of the feeding member (43) in the middle of the filling process, and
wherein the controller (70) is programmed to perform switchover from the filling process to the hold pressure process on the basis of the amount of change of a detection value of the detector after the setting speed is reduced.

2. The injection molding machine according to Claim 1,
wherein the controller (70) is programmed to perform switchover from the filling process to the hold pressure process on the basis of the time differential of a detection value of the detector after the setting speed is reduced.

3. The injection molding machine according to Claim 2,
wherein the controller (70) is programmed to perform switchover from the filling process to the hold pressure process when the detection value of the detector decreases after the setting speed is reduced and the time differential exceeds a reference value.

4. The injection molding machine according to any one of Claims 1 to 3,
wherein the detector includes a pressure detector (47) that detects the pressure acting on the molding material from the feeding member (43).

5. The injection molding machine according to any one of Claims 1 to 4,
wherein the detector includes a nozzle pressure detector (48) that detects the pressure of the molding material within a nozzle (42) provided at a front end of the cylinder (41).

## Patentansprüche

1. Spritzgießmaschine, umfassend:
einen Zylinder (41), der einen Gießwerkstoff erhitzt, der in das Innere einer Formeinheit (30) gefüllt wird;
ein Zuführbauteil (43), das den Gießwerkstoff im Inneren des Zylinders (41) fördert;
eine Antriebsvorrichtung (46), die das Zuführbauteil (43) nach vorn und nach hinten bewegt;
eine Steuerung (70), die so programmiert ist, dass sie einen Füllvorgang mittels Antreiben der Antriebsvorrichtung (46) zum Steuern der Geschwindigkeit des Zuführbauteils (43) und einen Druckhaltevorgang mittels Antreiben der Antriebsvorrichtung zum Steuern des Drucks, der von dem Zuführbauteil (43) auf den Gießwerkstoff ausgeübt wird, durchführt; und
einen Detektor (47, 48), der Informationen über den Druck des Gießwerkstoffs ermittelt,
wobei die Steuerung (70) so programmiert ist, dass sie die eingestellte Geschwindigkeit des Zuführbauteils (43) in der Mitte des Füllvorgangs verringert, falls die Geschwindigkeit des Zuführbauteils (43) bei Bewegung nach vorne positiv gesetzt ist und die Geschwindigkeit des Zuführbauteils (43) bei Bewegung nach hinten negativ gesetzt ist, und
wobei die Steuerung (70) so programmiert ist, dass sie das Umschalten von dem Füllvorgang zu dem Druckhaltevorgang auf Grundlage der Größe der Änderung eines Detektionswertes des Detektors durchführt, nachdem die eingestellte Geschwindigkeit verringert wurde.

2. Die Spritzgießmaschine nach Anspruch 1, wobei die Steuerung (70) so programmiert ist, dass sie das Umschalten von dem Füllvorgang zu dem Nachdrückvorgang auf der Grundlage des Zeitdifferenzials eines Detektionswertes des Detektors durchführt, nachdem die eingestellte Geschwindigkeit verringert wurde.

3. Die Spritzgießmaschine nach Anspruch 2, wobei die Steuerung (70) so programmiert ist, dass sie das Umschalten von dem Füllvorgang zu dem Druckhaltevorgang durchführt, wenn der Detektionswert des Detektors abnimmt, nachdem die eingestellte Geschwindigkeit verringert wurde und das Zeitdifferenzial einen Referenzwert überschreitet.

4. Die Spritzgießmaschine nach einem der Ansprüche 1 bis 3, wobei der Detektor einen Druckdetektor (47) umfasst, der den Druck detektiert, welcher durch das Zuführbauteil (43) auf den Gießwerkstoff ausgeübt wird.

5. Die Spritzgießmaschine nach einem der Ansprüche 1 bis 4, wobei der Detektor einen Düsendruckdetektor (48) umfasst, der den Druck des Gießwerkstoffs in einer am vorderen Ende des Zylinders (41) angeordneten Düse (42) detektiert.

## Revendications

1. Machine de moulage par injection comprenant :
un cylindre (41) qui chauffe un matériau de moulage qui remplit l'intérieur d'une unité de moule (30) ;
un élément d'alimentation (43) qui fournit le matériau de moulage dans le cylindre (41) ;
un dispositif d'entraînement (46) qui déplace l'élément d'alimentation (43) vers l'avant et vers l'arrière ;
un contrôleur (70) qui est programmé pour exécuter un processus de remplissage qui consiste à entraîner le dispositif d'entraînement (46) afin de réguler la vitesse de l'élément d'alimentation (43), et un processus de maintien de la pression qui consiste à entraîner le dispositif d'entraînement afin de réguler la pression qui agit sur le matériau de moulage qui provient de l'élément d'alimentation (43) ; et
un détecteur (47 ; 48) qui détecte des informations sur la pression du matériau de moulage, le contrôleur (70) étant programmé pour réduire, si la vitesse de l'élément d'alimentation (43) lors du déplacement vers l'avant est rendue positive et si la vitesse de l'élément d'alimentation (43) lors du déplacement vers l'arrière est rendue négative, la vitesse de réglage de l'élément d'alimentation (43) au milieu du processus de remplissage, et
dans laquelle le contrôleur (70) est programmé pour passer du processus de remplissage au processus de maintien de la pression sur la base de la quantité de changement d'une valeur de détection du détecteur après que la vitesse de réglage a été réduite.

2. Machine de moulage par injection selon la revendication 1,
dans laquelle le contrôleur (70) est programmé pour passer du processus de remplissage au processus de maintien de la pression sur la base de l'écart de temps d'une valeur de détection du détecteur après que la vitesse de réglage a été réduite.

3. Machine de moulage par injection selon la revendication 2,
dans laquelle le contrôleur (70) est programmé pour passer du processus de remplissage au processus de maintien de la pression lorsque la valeur de détection du détecteur diminue après que la vitesse de réglage a été réduite, et lorsque l'écart de temps dépasse une valeur de référence.

4. Machine de moulage par injection selon l'une quelconque des revendications 1 à 3,
dans laquelle le détecteur comprend un détecteur de pression (47) qui détecte la pression qui agit sur le matériau de moulage qui provient de l'élément d'alimentation (43).

5. Machine de moulage par injection selon l'une quelconque des revendications 1 à 4,
dans laquelle le détecteur comprend un détecteur de pression de buse (48) qui détecte la pression du matériau de moulage dans une buse (42) prévue au niveau d'une extrémité avant du cylindre (41).
